(19)

Europäisches
Patentamt
European
Patent Office
Office européen
des brevets

(11) **EP 1 602 300 B1**

(12) **EUROPÄISCHE PATENTSCHRIFT**

(45) Veröffentlichungstag und Bekanntmachung des
Hinweises auf die Patenterteilung:
**07.11.2007 Patentblatt 2007/45**

(51) Int Cl.:
***A46B 9/02*** *(2006.01)*

(21) Anmeldenummer: **05005438.6**

(22) Anmeldetag: **13.04.2005**

(54) **Applikator für flüssige oder pastöse Medien, insbesondere dekorative Kosmetika wie Mascara**

Applicator for liquid or pastelike mediums, expecially cosmetics like mascara

Applicateur pour des matérioux liquide ou pateux, en particulier des produit cosmétique come mascara

(84) Benannte Vertragsstaaten:
**AT BE BG CH CY CZ DE DK EE ES FI FR GB GR
HU IE IS IT LI LT LU MC NL PL PT RO SE SI SK TR**

(30) Priorität: **01.06.2004 DE 102004027098**

(43) Veröffentlichungstag der Anmeldung:
**07.12.2005 Patentblatt 2005/49**

(73) Patentinhaber: **Beiersdorf AG**
**20253 Hamburg (DE)**

(72) Erfinder:
• **Eckers, Lorenz**
**21255 Tostedt (DE)**

• **Hahl, Michael**
**22299 Hamburg (DE)**

(74) Vertreter: **Hartmann, Jost**
**Beiersdorf AG,**
**Unnastrasse 48**
**20253 Hamburg (DE)**

(56) Entgegenhaltungen:
**EP-A- 0 474 934        EP-A- 1 384 417**
**DE-U1- 8 010 740        GB-A- 2 074 443**
**US-A- 5 611 361        US-B1- 6 408 857**

## Beschreibung

Die Erfindung betrifft einen Applikator für flüssige oder pastöse Medien, insbesondere für dekorative Kosmetika wie Mascara oder Haarfärbemittel, mit einem stabförmigen, aussteifenden Kern aus einem ersten Kunststoff-Material, der zumindest im Bereich seines vorderen Endes nach außen auskragende Zinken aufweist, die in Längsrichtung der Trägerhülse einen Kamm bilden, wobei der ausssteifende Kern zumindest teilweise von einer Trägerhülse aus einem zweiten Kunststoff-Material umgeben ist, die eine Vielzahl von radial nach außen auskragenden Fingern aufweist, die einstückig an die Trägerhülse angeformt sind und aus dem zweiten Kunststoff-Material bestehen, wobei mehrere über den Umfang der Trägerhülse verteilte Finger einen Fingerkranz bilden und wobei in Längsrichtung der Trägerhülse eine Vielzahl N von Fingerkränzen mit gleicher Fingeranzahl n hintereinander angeordnet sind.

Ein entsprechender Applikator ist in verschiedenen Anwendungsbereichen einsetzbar. Im folgenden soll beispielhaft von der Applikation von Wimperntusche, der so genannten Mascara, ausgegangen werden, jedoch ist der erfindungsgemäße Applikator in gleichartiger Weise unter anderem auch für das Färben von Haarsträhnen oder für das Auftragen von Pharmazeutika zu verwenden.

Ein Applikator für Mascara sollte sicherstellen, dass die Mascara in einfacher Weise gleichmäßig aufzutragen ist. Zu diesem Zweck muss der Applikator die Voraussetzung erfüllen, dass die Wimpern vor dem Auftragen der Mascara zunächst gekämmt und somit in gewünschter Weise ausgerichtet werden. Darüber hinaus soll der Applikator soviel Mascara aufnehmen können, dass sämtliche Wimpern mit dem Applikator gefärbt werden können, ohne diesen mehrfach in den Mascara-Vorratsbehälter eintauchen zu müssen. Damit der Auftrag der Mascara gleichmäßig und klecksfrei erfolgt, muss sichergestellt sein, dass nicht übermäßig viel Mascara an dem Applikator anhaftet, weshalb dieser üblicherweise beim Herausziehen aus dem Mascara-Vorratsbehälter abgestreift wird. Da der Applikator als frei auskragendes Bauteil mit einem endseitigen Handgriff ausgebildet ist, muss er eine ausreichende Stabilität besitzen, um die bei Benutzung einwirkenden Kräfte sicher aufnehmen zu können, ohne dass die Gefahr eines Abbrechens besteht. Andererseits muss der Applikator jedoch so flexibel sein, dass er sich an die Krümmung der Augenlider anpassen lässt und bei fehlerhafter Anwendung ausreichend nachgiebig ist, um Verletzungen des Benutzers im Augenbereich zu vermeiden.

Aus DE 101 02 219 sind Applikatoren für flüssige oder pastöse Medien, insbesondere für dekorative Kosmetika wie Mascara bekannt, die einen stabförmigen, aussteifenden Kern aus einem ersten Kunststoff-Material besitzen, der zumindest im Bereich seines vorderen Endes von einer Trägerhülse aus einem zweiten Kunststoff-Material umgeben ist, wobei die Trägerhülse eine Vielzahl von radial nach außen auskragenden Fingern besitzt, die einstückig an die Trägerhülse angeformt sind und ebenfalls aus dem zweiten Kunststoff-Material bestehen. Mehrere über den Umfang der Trägerhülse verteilte Finger bilden einen Fingerkranz und in Längsrichtung der Trägerhülse sind eine Vielzahl von Fingerkränzen mit gleicher Fingeranzahl hintereinander angeordnet, und bilden eine rotationssymmetrische Bürste. Ein wesentlicher Nachteil einer derartigen Applikatorbürste besteht darin, dass aufgrund der gleichförmigen Anordnung der Borsten ein gleichmäßiges Kämmen der Wimpern nicht zu erzielen ist, da die Borsten zu flexibel für einen kammartigen Eingriff in das Haar sind.

Der Erfindung liegt die Aufgabe zugrunde, einen gattungsgemäßen Applikator derart weiterzubilden, dass sowohl eine verbesserte Kämmwirkung als auch eine gute und gleichmäßige Aufbringung des aufzutragenden Mediums gewährleistet ist.

Um die Nachteile der vollständig mit Borstenbesatz versehenen Bürste zu vermeiden, ist gemäß der DE 199 11 763 ein Applikator entwickelt worden, von dem im Oberbegriff des Anspruchs 1 ausgegangen wird.

Ein derartiger erfindungsgemäßer Applikator besitzt einen aussteifenden, stabförmigen Kern, der zumindest im Bereich seines vorderen Endes nach außen auskragende Zinken aufweist, die in Längsrichtung der Trägerhülse einen Kamm bilden. Auf den verbleibende Umfang des stabförmigen Kerns, wird im Bereich der kammförmigen Zinken ein elastomerer Kunststoffmantel in Form einer Trägerhülse mit radial nach außen vorstehenden, einstückig angeformten Fingern aufgespritzt, wobei die Finger einen sich zu ihrem freien Ende hin verjüngenden Querschnitt aufweisen. Erfindungsgemäß findet hierbei ein Zwei- oder Mehrkomponentenspritzgussverfahren Anwendung. Durch dieses Herstellungsverfahren wird erreicht, das sich aussteifender Kern und elastomerer Kunststoffmantel unlösbar verbinden.

Im Sinne der Erfindung ist es auch, den aussteifenden Kern und den elastomeren Kunststoffmantel unter Einsatz von Hilfsstoffen zu verbinden, insbesondere durch Verwendung Haftvermittlern, Primern, Klebstoffen, Harzen und Lösungsmitteln.

Besonders vorteilhaft ist es, wenn der aussteifende Kern Vorsprünge oder Vertiefungen aufweist, die zu einer Verzahnung mit dem elastomeren Kunststoffmantel führen.

Durch die Kombination eines Kammbereichs aus festem Material und eines Bürstenbereichs aus flexiblen Material ist es möglich die Haare bzw. Wimpern vor und nach der Benetzung mit einem Substrat zu kämmen.

Die Anzahl der Zinken, die den harten Kamm bilden, wird erfindungsgemäß zwischen 8 und 35 gewählt, wobei die äußeren Zinken verbreitert und/oder abgerundet ausgestaltet werden können.

Die Zinken können konisch als auch gerade ausgeführt werden, wobei der Zinken-Querschnitt rund, quadratisch oder mehreckig ausgeführt sein kann. Vorteilhaft ist es, wenn Abstände und Länge der Zinken den Längen und Abständen der elastischen Finger entsprechen.

Alle Fingerkränze sollten die gleiche Anzahl von Fingern aufweisen, die vorzugsweise über den Umfang der Trägerhülse gleichverteilt sind, d.h. einen gleichen gegenseitigen Winkelabstand besitzen. Die Anzahl n der Finger pro Fingerkranz liegt bei dem erfindungsgemäßen Applikator zwischen 5 und 13., wobei insbesondere eine ungerade Anzahl n der Finger (5, 7, 9, 11 oder 13 Finger) vorgesehen sein sollte.

Während die Anzahl n der Finger pro Fingerkranz die Anordnungsdichte der Finger in Umfangsrichtung bestimmt, ist die Anordnungsdichte der Finger in Längsrichtung der Trägerhülse und somit des Applikators durch die Anzahl N der in Axialrichtung hintereinander liegenden Fingerkränze bestimmt. Der Abstand zwischen benachbarten Fingerkränzen sollte innerhalb eines vorbestimmten Bereiches liegen und darüber hinaus sollten auch nicht zu viele Fingerkränze vorgesehen sein, um die Handhabung des Applikators nicht zu erschweren und um auch bei relativ kleinen Wimpern noch einen guten Mascara-Auftrag zu erreichen. Erfindungsgemäß ist deshalb vorgesehen, dass der Applikator zwischen 14 und 32 Fingerkränze und insbesondere zwischen 18 und 26 Fingerkränze aufweist.

Die Finger aller Fingerkränze können mit gleichen Abmessungen ausgestaltet sein. Es hat sich jedoch als vorteilhaft erwiesen, sowohl am vorderen als auch am hinteren Ende des Applikators Fingerkränze mit Fingern verringerter Abmessungen auszubilden. Diese Fingerkränze kleinerer Finger werden zwar bei der Anzahl N der Fingerkränze mitgezählt, jedoch beziehen sich die folgenden Ausführungen auf die Finger eines im mittleren Bereich liegenden normalen Fingerkranzes. Dabei ist vorgesehen, dass die Länge I der Finger, d.h. das Maß, um das der Finger in radialer Richtung von der Trägerhülse hervorsteht, im Bereich von 1,5 mm bis 3,0 mm liegt.

Auch der gegenseitige Abstand $s_1$ benachbarter Fingerkränze ist ein Maß, dass die Kämmwirkung und den Mascaraauftrag wesentlich beeinflusst. Der Abstand $s_1$, der zwischen den freien Enden gleichartiger Finger benachbarter Fingerkränze gemessen wird, sollte erfindungsgemäß im Bereich von 0,6 mm bis 1,5 mm liegen.

Im Bereich der Füße der Finger, d.h. im Anschlussbereich der Finger an die Trägerhülse, sollten die Finger benachbarter Fingerkränze einen lichten Abstand $s_2$ in der Größenordnung von 0,2 mm bis 0,5 mm aufweisen.

In einem ersten Ausführungsbeispiel der Erfindung ist vorgesehen, dass der Applikator folgende Parameter-Kombination, besitzt:

$$
\begin{array}{ll}
\text{I. } n = 7 & \text{IV. } s_1 = 0{,}95 \text{ mm} \\
\text{II. } N = 27 & \text{V. } s_2 = 0{,}25 \text{ mm} \\
\text{III. } I = 2{,}4 \text{ mm} &
\end{array}
$$

In einer weiteren möglichen Ausgestaltung ist vorgesehen, dass die Parameter in Kombination folgende Werte annehmen:

$$
\begin{array}{ll}
\text{I. } n = 11 & \text{IV. } s_1 = 1{,}2 \text{ mm} \\
\text{II. } N = 22 & \text{V. } s_2 = 0{,}42 \text{ mm} \\
\text{III. } I = 2{,}4 \text{ mm} &
\end{array}
$$

Der Applikator weist eine im wesentlichen kreiszylinderförmige Konfiguration auf, d.h. eine Hüllfläche des Applikators besitzt einen Kreisquerschnitt, der entweder über die gesamte Länge des Fingerfeldes konstant ist oder lediglich in dessen Endbereichen in genannter Weise verringert ist. Für die praktische Handhabung des Applikators hat es sich als sinnvoll erwiesen, wenn dieser einen Außendurchmesser D im Bereich von 6,0 mm bis 10,0 mm und insbesondere von 7,5 mm bis 8,5 mm aufweist.

Der aussteifende, stabförmige Kern besitzt vorzugsweise einen Kreisquerschnitt, dessen Durchmesser im Bereich von 1,5 mm bis 2,5 mm liegt und insbesondere 1,9 mm bis 2,1 mm beträgt. Der Kern kann über seine gesamte Länge einen gleich bleibenden Querschnitt aufweisen, vorzugsweise ist jedoch vorgesehen, dass der Kern sich an seinem vorderen Ende verjüngt.

Der stabförmige Kern kann gerade ausgebildet sein, alternativ ist es jedoch auch möglich den Kern gekrümmt auszugestalten, wobei in diesem Fall eine "Bananenform", d.h. eine stetige gleichsinnige Krümmung bevorzugt ist.

Die Wandstärke a der Trägerhülse bestimmt wesentlich die elastische Lagerung der Finger und somit deren Verformbarkeit. In dem Bereich, in dem der Kern einen konstanten Querschnitt aufweist, sollte die radiale Wandstärke a der Trägerhülse im Bereich von 0,3 mm bis 1,0 mm liegen und insbesondere 0,5 mm bis 0,7 mm betragen. Wenn sich der Kern an seinem vorderen Ende verjüngt, wird die Wandstärke a der Trägerhülse in diesem Bereich entsprechend vergrößert, so dass die Außenkontur der Trägerhülse im wesentlichen kreiszylinderförmig ist.

Die gesamte axiale Länge L der Trägerhülse sollte im Bereich von 20,0 mm bis 35,0 mm liegen und insbesondere 24,0 mm bis 26.0 mm betragen.

Der Applikator wird vorzugsweise im Zwei-Komponenten-Verfahren hergestellt. In einem ersten Schritt wird der stabförmige Kern aus dem ersten Kunststoff-Material gespritzt, woraufhin dann in einem zweiten Schritt ein elastomeres zweites Kunststoff-Material zur Bildung der Trägerhülse und der Finger auf den Kern aufgespritzt wird.

Erfindungsgemäß kann vorgesehen sein, den vorderen Bereich des Applikators mit erhöhter Flexibilität auszubilden. Dies kann dadurch erreicht werden, dass die Trägerhülse mit ihrem vorderen Endabschnitt um das Maß v über das vordere Ende des Kerns hinausragt, so dass der vordere Endabschnitt des Applikators vollständig aus dem elastomeren zweiten Kunststoff-Material gebildet ist. Das Maß v kann im Bereich von 1,0 mm bis 8,0 mm liegen und beträgt vorzugsweise 2,5 mm bis 4,5 mm.

In der einfachsten geometrischen Ausgestaltung liegen die Finger jedes Fingerkranzes mit ihren Mittelachsen in einer gemeinsamen, sich senkrecht zur Längsrichtung des Applikators erstreckenden Ebene, so dass kein Versatz einzelner Finger in Längsrichtung der Trägerhülse bzw. des Applikators vorgesehen ist. Alternativ ist es jedoch auch möglich, dass zumindest ein Finger eines Fingerkranzes gegenüber den anderen Fingern des Fingerkranzes um das Maß $v_F$ in Längsrichtung der Trägerhülse versetzt angeordnet ist. In bevorzugter Ausgestaltung der Erfindung ist dabei vorgesehen, dass jeder zweite Finger des Fingerkranzes versetzt angeordnet ist, so dass die Finger eines Fingerkranzes in zwei parallelen, in Längsrichtung der Trägerhülse beabstandeten, sich senkrecht zur Längsrichtung der Trägerhülse erstreckenden Ebenen liegen. Das Versatzmaß $V_F$ wird vorzugsweise als Vielfaches des Fußdurchmessers $d_F$ der Finger angegeben zu $V_F = f \times d_F$, wobei f ein Faktor im Bereich von 0 (kein Versatz) bis 1,5 (maximaler Versatz) ist.

Neben einem Versatz einzelner Finger innerhalb eines Fingerkranzes, können auch benachbarte Fingerkränze relativ zueinander in Umfangsrichtung um einen Winkel $\alpha$ versetzt angeordnet sein, wobei $\alpha$ zwischen 0° und 10° liegen sollte. Wenn $\alpha = 0°$ ist und somit kein Winkelversatz vorhanden ist, liegen die Spitzen gleichartiger Finger der Fingerkränze auf einer in Längsrichtung des Applikators verlaufenden Geraden. Wenn zwischen benachbarten Fingerkränzen ein Winkelversatz vorhanden ist, sind die Spitzen gleichartiger Finger der Fingerkränze auf einer umlaufenden Spirallinie angeordnet.

In bevorzugter Ausgestaltung der Erfindung ist vorgesehen, dass jeder Finger kegelförmig ausgebildet ist und einen Fußdurchmesser $d_F$ im Bereich von 0,4 mm bis 1,0 mm und insbesondere von 0,65 mm bis 0,70 mm besitzt. Die Finger sind an ihrem freien Ende vorzugsweise abgerundet, wobei ein Radius R der Abrundung im Bereich von 0,02 mm und 0,2 mm liegt und insbesondere 0,04 mm bis 0,08 mm beträgt.

Weitere Einzelheiten und Merkmale der Erfindung sind aus der folgenden Beschreibung von Ausführungsbeispielen unter Bezugnahme auf die Zeichnung ersichtlich. Es zeigen:

Figur 1    eine Seitenansicht eines Applikators gemäß einem grundsätzlichen Aufbau,

Figur 2    eine Aufsicht auf die Spitze A des Applikators gemäß Fig. 1,

Figur 3    den Schnitt III-III in Fig. 1,

Figur 4    eine Seitenansicht des aussteifenden Kerns mit einer Anzahl von kammartig angeordneten Zinken,

Figur 5    den Schnitt V-V in Fig. 4,

Figur 6    einen ausschnittsweisen Längsschnitt, Schnitt V-V in Fig. 3, des Applikators gemäß Fig. 3.

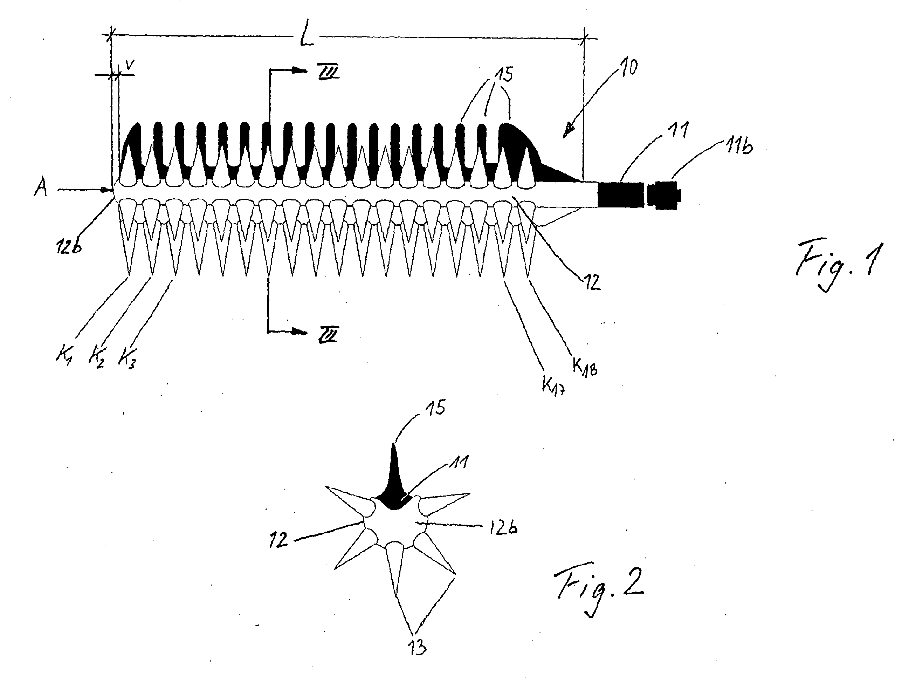

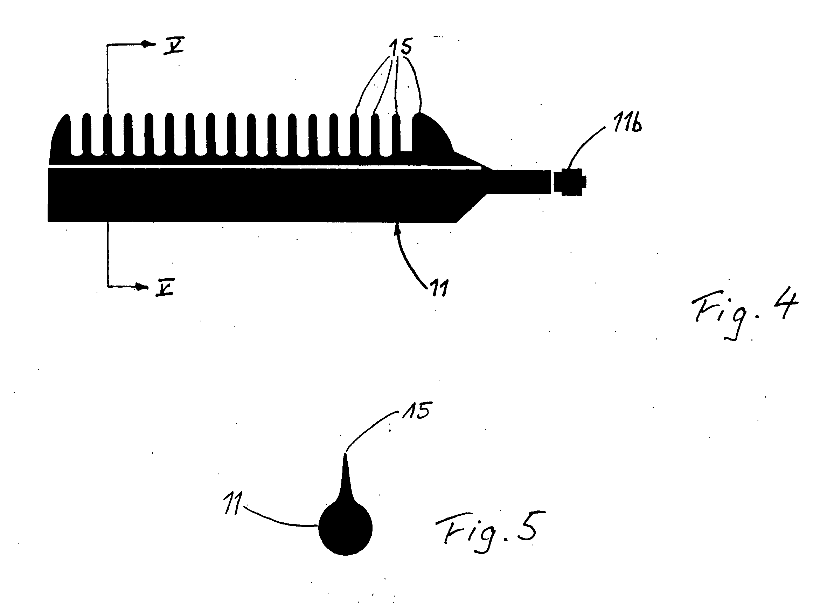

Die Fig. 1 bis 5 zeigen einen Applikator 10 grundsätzlichen Aufbaus anhand dessen in Verbindung mit Fig. 6 die einzelnen Parameter erläutert werden sollen.

Der Applikator 10 besitzt einen stabförmigen, aussteifenden Kern 11 mit einer Anzahl kammartig angeordneter Zinken 15, der an seinem hinteren Ende mit Verbindungselementen 11 b zur Anbringung an einem nicht dargestellten Aufnahmeteil versehen ist. Der Kern 11 besteht aus einem ersten Kunststoff-Material und wird in der ersten Phase eines Zwei-Komponenten-Spritzgussverfahrens hergestellt.

Auf den stabförmigen Kern 11 wird in einer zweiten Phase des Zwei-Komponenten-Spritzgussverfahrens eine Trägerhülse 12 aus einem elastomeren zweiten Kunststoff-Material aufgespritzt, die mit dem Kern 11 fest verbunden ist. Die Außenkontur der Trägerhülse 12 ist nahezu kreiszylindrisch und nur im Bereich der Zinken durchbrochen. Die Trägerhülse 12 ragt mit einem vorderen Endabschnitt 12b um das Maß v (siehe Fig. 2) über das vordere Ende des Kerns 11 hinaus, so dass der vordere Endabschnitt teilweise aus dem elastomeren zweiten Kunststoff-Material gebildet ist.

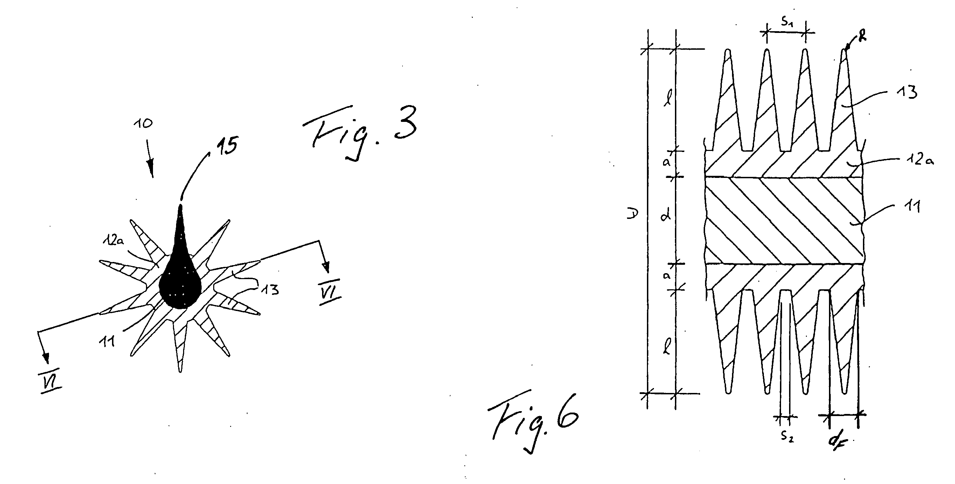

Auf der Außenseite der Trägerhülse 12 sind radial nach außen auskragende, sich zu ihrem freien Ende hin kegelförmig verjüngende Finger 13 einstückig angeformt, die ebenfalls aus dem elastomeren zweiten Kunststoff-Material bestehen. Die Finger 13 sind in Form von insgesamt N Fingerkränzen $K_1$, $K_2$....$K_{17}$, $K_{18}$ angeordnet, die in Längsrichtung der Trägerhülse 12 mit gleichem Abstand hintereinander liegend angeordnet sind. Jeder Fingerkranz $K_i$ (siehe Fig. 3) umfasst eine gewisse Anzahl n von Fingern 13, die jeweils in einer sich senkrecht zur Längsrichtung der Trägerhülse 12 erstreckenden Ebene VI liegen, von denen in Fig. 3 nur eine angedeutet ist, und unter gleichem Winkelabstand über den Umfang der Trägerhülse 12 gleich verteilt sind. Bei dem in den Fig. 1 bis 2 dargestellten Ausführungsbeispiel sind insgesamt N = 18 Fingerkränze vorgesehen, die alle n = 5 Finger 13 umfassen. Die Anordnung und Ausgestaltung der Finger 13 ist bei den Fingerkränzen identisch.

Wie Fig. 1 zeigt, besitzt die Trägerhülse 12 eine Gesamtlänge L, wobei der Kern 11 an seinem hinteren, die Verbindungselemente 11 b aufweisenden Ende aus der Trägerhülse 12 herausragt.

Wie Fig. 3 zeigt, können die Finger 13 eines beliebigen Fingerkranzes $K_i$ mit ihren Spitzen auf einer sich senkrecht zur Längsrichtung der Trägerhülse 12 erstreckenden Ebene VI liegen, wobei die Ebenen benachbarter Fingerkränze einen konstanten gegenseitigen Abstand aufweisen.

Fig. 6 zeigt die geometrischen Verhältnisse im Mittelbereich des Applikators 10. Der Kern 11 weist in seinem Abschnitt konstanten kreisförmigen Querschnitts einen Außendurchmesser d auf und ist von der Trägerhülse 12 mit einer Wanddicke a umgeben. Die Trägerhülse 12 trägt außenseitig die nach außen auskragenden, kegelförmigen, d.h. sich zum freien Ende konisch verjüngenden Finger 13, die eine radiale Länge l besitzen. Der Gesamtdurchmesser d einer Hüllfläche des Applikators ergibt sich somit zu:

$$D = d + 2a + 2l.$$

Die zugeordneten Finger 13 benachbarter Fingerkränze besitzen an ihren freien Enden einen gegenseitigen Abstand $s_1$, während zwischen den Fingerfüßen zugeordneter Finger benachbarter Fingerkränze ein lichter Abstand $s_2$ besteht, wie in Fig. 6 dargestellt ist. Die Finger 13 besitzen die Form eines Kreiskegels, wobei die Grund- oder Anschlussfläche des Fingers einen Durchmesser $d_F$ aufweist. Die Finger sind an ihrem äußeren freien Ende mit einem Radius R abgerundet.

**Patentansprüche**

1. Applikator für flüssige oder pastöse Medien, insbesondere für dekorative Kosmetika wie Mascara, mit einem stabförmigen, aussteifenden Kern (11) aus einem ersten Kunststoff-Material, der zumindest im Bereich seines vorderen Endes nach au-ßen auskragende Zinken (15) aufweist, die in Längsrichtung der Trägerhülse einen Kamm bilden, wobei der aussteifende Kern zumindest teilweise von einer Trägerhülse (12) aus einem zweiten Kunststoff-Material umgeben ist, die eine Vielzahl von radial nach außen auskragenden Fingern (13) aufweist, die einstückig an die Trägerhülse (12) angeformt sind und aus dem zweiten Kunststoff-Material bestehen, wobei mehrere über den Umfang der Trägerhülse (12) verteilte Finger (13) einen Fingerkranz ($K_1$, $K_2$, $K_3$...) bilden und wobei in Längsrichtung der Trägerhülse (12) eine Vielzahl N von Fingerkränzen ($K_1$, $K_2$, $K_3$...) mit gleicher Fingeranzahl n hintereinander angeordnet sind und durch folgende Parameter-Kombination, **gekennzeichnet** :

   I. Anzahl n der Finger (13) pro Fingerkranz ($K_1$, $K_2$, $K_3$...): 5 bis 13,
   II. Anzahl N der in Axialrichtung der Trägerhülse hintereinander liegenden Fingerkränze ($K_1$, $K_2$, $K_3$...): $14 \leq N \leq 32$, insbesondere $18 \leq N \leq 26$
   III. Länge l der Finger (13): $1,5 \text{ mm} \leq l \leq 3,0 \text{ mm}$,
   IV. Abstand $s_1$ der freien Enden gleichartiger Finger (13) benachbarter Fingerkränze ($K_1$, $K_2$, $K_3$...): $0,6 \text{ mm} \leq s_1 \leq 1,5 \text{ mm}$ und
   V. Abstand $s_2$ der Füße gleichartiger Finger (13) benachbarter Fingerkränze ($K_1$, $K_2$, $K_3$...): $0,2 \text{ mm} \leq s_2 \leq 0,5 \text{ mm}$.

2. Applikator nach Anspruch 1, **gekennzeichnet durch** folgende Parameter-Kombination:

   I. n =5         II. N =18         III. l =2,4mm
   IV. $s_1$ = 0,95 mm     V. $s_2$ = 0,25 mm.

3. Applikator nach Anspruch 1, **gekennzeichnet durch** folgende Parameter-Kombination:

   I. n = 11       II. N = 28       III. l = 2,4 mm
   IV. $s_1$ = 1,2 mm     V. $s_2$ = 0,42 mm.

**4.** Applikator nach einem der Ansprüche 1 bis 3, **dadurch gekennzeichnet, dass** die Anzahl N der in Axialrichtung der Trägerhülse hintereinander liegenden Fingerkränze ($K_1$, $K_2$, $K_3$...) gleich der Anzahl der Zinken 15 ist.

**5.** Applikator nach einem der Ansprüche 1 bis 4, **dadurch gekennzeichnet, dass** die Finger (13) des Fingerkranzes ($K_1$, $K_2$, $K_3$...) über den Umfang der Trägerhülse (12) gleich verteilt sind.

**6.** Applikator nach einem der Ansprüche 1 bis 4, **dadurch gekennzeichnet, dass** der Applikator einen Außendurchmesser D im Bereich von 6,0 mm bis 10,0 mm aufweist.

**7.** Applikator nach einem der Ansprüche 1 bis 6, **dadurch gekennzeichnet, dass** der Außendurchmesser d des Kerns (11) im Bereich von 1,5 mm bis 2,5 mm liegt.

**8.** Applikator nach einem der Ansprüche 1 bis 7, **dadurch gekennzeichnet, dass** die Trägerhülse (12) eine radiale Wandstärke a im Bereich von 0,3 mm bis 1,0 mm aufweist.

**9.** Applikator nach einem der Ansprüche 1 bis 8, **dadurch gekennzeichnet, dass** die Trägerhülse (12) zusammen mit den Fingern (13) aus einem elastomeren Kunststoff besteht.

**10.** Applikator nach einem der Ansprüche 1 bis 9, **dadurch gekennzeichnet, dass** die Trägerhülse (12) eine axiale Länge L im Bereich von 20,0 mm bis 35,0 mm besitzt.

**11.** Applikator nach einem der Ansprüche 1 bis 10, **dadurch gekennzeichnet, dass** die Trägerhülse (13) in ihrem vorderen Endabschnitt (12b) um das Maß v über das vordere Ende (11d) des Kerns (11) hinausragt, wobei v im Bereich von 1,0 mm bis 8,0 mm liegt.

**12.** Applikator nach mindestens einem der vorhergehenden Ansprüche, **dadurch gekennzeichnet, dass** die Anzahl der Zinken (15) nicht weniger als N - 5 und nicht mehr als N +5 beträgt

**13.** Applikator nach einem der Ansprüche 1 bis 12, **dadurch gekennzeichnet, dass** zumindest ein Finger eines Fingerkranzes gegenüber den anderen Fingern des Fingerkranzes um das Maß $v_F$ in Längsrichtung der Trägerhülse (12) versetzt angeordnet ist.

**14.** Applikator nach Anspruch 13, **dadurch gekennzeichnet, dass** jeder zweite Finger des Fingerkranzes versetzt angeordnet ist.

**15.** Applikator nach einem der Ansprüche 1 bis 14, **dadurch gekennzeichnet, dass** benachbarte Fingerkränze ($K_1$, $K_2$, $K_3$...) in Umfangsrichtung um einen Winkel $\alpha$ versetzt zueinander angeordnet sind, wobei gilt: $0° \leq \alpha \leq 10°$.

**16.** Applikator nach einem der Ansprüche 1 bis 15, **dadurch gekennzeichnet, dass** der Fußdurchmesser $d_F$ des Fingers (13) im Bereich von 0,4 mm bis 1,0 mm liegt.

**17.** Applikator nach einem der Ansprüche 1 bis 16, **dadurch gekennzeichnet, dass** die Finger (13) kegel- oder pyramidenförmig ausgebildet und an ihrem freien Ende abgerundet sind.

**18.** Applikator nach Anspruch 17, **dadurch gekennzeichnet, dass** ein Radius R der Abrundung im Bereich von 0,02 mm und 0,2 mm liegt.

**Claims**

**1.** Applicator for liquid or pasty media, in particular decorative cosmetics such as mascara, having a rod-like, stiffening core (11) which is made of a first plastics material and, at least in the region of its front end, has outwardly projecting prongs (15) which form a comb in the longitudinal direction of the carrier sleeve, it being the case that the stiffening core is enclosed, at least in part, by a carrier sleeve (12) which is made of a second plastics material and has a multiplicity of radially outwardly projecting fingers (13), which are integrally formed on the carrier sleeve (12) and consist of a second plastics material, that a plurality of fingers (13), distributed over the circumference of the carrier sleeve (12), form a finger ring ($K_1$, $K_2$, $K_3$, etc.), and that a multiplicity N of finger rings ($K_1$, $K_2$, $K_3$, etc.) with the same number n of fingers are arranged one behind the other in the longitudinal direction of the carrier sleeve (12), **characterized by** the following combination of parameters:

I. number n of fingers (13) per finger ring ($K_1$, $K_2$, $K_3$, etc.): 5 to 13,
II. number N of finger rings ($K_1$, $K_2$, $K_3$, etc.) located one behind the other in the axial direction of the carrier sleeve: $14 \leq N \leq 32$, in particular $18 \leq N \leq 26$
III. length 1 of the fingers (13): $1.5 \text{ mm} \leq 1 \leq 3.0 \text{ mm}$,
IV. spacing $s_1$ between the free ends of identical fingers (13) of adjacent finger rings ($K_1$, $K_2$, $K_3$, etc.): $0.6 \text{ mm} \leq s_1 \leq 1.5 \text{ mm}$ and
V. spacing $s_2$ between the feet of identical fingers (13) of adjacent finger rings ($K_1$, $K_2$, $K_3$, etc.): $0.2 \text{ mm} \leq s_2 \leq 0.5 \text{ mm}$.

2. Applicator according to Claim 1, **characterized by** the following combination of parameters:

I. n = 5        II. N = 18        III. 1 = 2.4 mm
IV. $s_1$ = 0.95 mm     V. $s_2$ = 0.25 mm.

3. Applicator according to Claim 1, **characterized by** the following combination of parameters:

I. n = 11        II. N = 28        III. 1 = 2.4 mm
IV. $s_1$ = 1.2 mm     V. $s_2$ = 0.42 mm.

4. Applicator according to one of Claims 1 to 3, **characterized in that** the number N of finger rings ($K_1$, $K_2$, $K_3$, etc.) located one behind the other in the axial direction of the carrier sleeve is equal to the number of prongs 15.

5. Applicator according to one of Claims 1 to 4, **characterized in that** the fingers (13) of the finger ring ($K_1$, $K_2$, $K_3$, etc.) are distributed equally over the circumference of the carrier sleeve (12).

6. Applicator according to one of Claims 1 to 4, **characterized in that** the applicator has an external diameter D in the range from 6.0 mm to 10.0 mm.

7. Applicator according to one of Claims 1 to 6, **characterized in that** the external diameter d of the core (11) is in the range from 1.5 mm to 2.5 mm.

8. Applicator according to one of Claims 1 to 7, **characterized in that** the carrier sleeve (12) has a radial wall thickness a in the range from 0.3 mm to 1.0 mm.

9. Applicator according to one of Claims 1 to 8, **characterized in that** the carrier sleeve (12), together with the fingers (13), consists of an elastomeric plastics material.

10. Applicator according to one of Claims 1 to 9, **characterized in that** the carrier sleeve (12) has an axial length L in the range from 20.0 mm to 35.0 mm.

11. Applicator according to one of Claims 1 to 10, **characterized in that** the carrier sleeve (12), in its front end section (12b), projects beyond the front end (11d) of the core (11) by the extent v, where v is in the range from 1.0 mm to 8.00 mm.

12. Applicator according at least to one of the preceding claims, **characterized in that** the number of prongs (15) is no less than N -5 and no more than N +5.

13. Applicator according to one of Claims 1 to 12, **characterized in that** at least one finger of a finger ring is offset by the extent $v_F$ in the longitudinal direction of the carrier sleeve (12) in relation to the other fingers of the finger ring.

14. Applicator according to Claim 13, **characterized in that** every second finger of the finger ring is offset.

**15.** Applicator according to one of Claims 1 to 14, **characterized in that** adjacent finger rings ($K_1$, $K_2$, $K_3$, etc.) are offset in relation to one another by an angle $\alpha$ in the circumferential direction, where $0° \leq \alpha \leq 10°$.

**16.** Applicator according to one of Claims 1 to 15, **characterized in that** the foot diameter $d_F$ of the finger (13) is in the range from 0.4 mm to 1.0 mm.

**17.** Applicator according to one of Claims 1 to 16, **characterized in that** the fingers (13) are designed in the form of cones or pyramids and are rounded at their free end.

**18.** Applicator according to Claim 17, **characterized in that** a radius R of the rounded formation is in the range from 0.02 mm to 0.2 mm.

**Revendications**

**1.** Applicateur pour des substances liquides ou pâteuses, notamment pour des produits cosmétiques comme du mascara, comprenant une âme (11) de renforcement en forme de barre constituée d'un premier matériau en plastique, qui présente des dents (15) saillant vers l'extérieur au moins dans la région de son extrémité avant, lesquelles forment un peigne dans la direction longitudinale de la gaine porteuse, l'âme de renforcement étant entourée au moins en partie d'une gaine porteuse (12) en un deuxième matériau en plastique, qui présente une pluralité de doigts (13) saillant radialement vers l'extérieur, qui sont moulés d'une seule pièce sur la gaine porteuse (12) et qui se composent du deuxième matériau en plastique, plusieurs doigts (13) répartis sur la périphérie de la gaine porteuse (12) formant une couronne de doigts ($K_1$, $K_2$, $K_3$...) et une pluralité N de couronnes de doigts ($K_1$, $K_2$, $K_3$...) ayant un nombre identique de doigts n étant disposées les unes derrière les autres dans la direction longitudinale de la gaine porteuse (12), et **caractérisé par** la combinaison de paramètres suivante :

I. Le nombre n des doigts (13) par couronne de doigts ($K_1$, $K_2$, $K_3$...) est de 5 à 13.
II. Le nombre N des couronnes de doigts ($K_1$, $K_2$, $K_3$...) situées les unes derrière les autres dans la direction axiale de la gaine porteuse est de $14 \leq N \leq 32$, notamment $18 \leq N \leq 26$.
III. La longueur I des doigts (13) est de $1,5$ mm $\leq I \leq 3,0$ mm.
IV. La distance $s_1$ entre les extrémités libres de doigts (13) identiques de couronnes de doigts adjacentes ($K_1$, $K_2$, $K_3$...) est de $0,6$ mm $\leq s_1 \leq 1,5$ mm.
V. La distance $s_2$ entre les bases de doigts (13) identiques de couronnes de doigts adjacentes ($K_1$, $K_2$, $K_3$...) est de $0,2$ mm $\leq s_2 \leq 0,5$ mm.

**2.** Applicateur selon la revendication 1, **caractérisé par** la combinaison de paramètres suivante :

I. n = 5  II. N = 18
III. I = 2,4 mm  IV. $s_1$ = 0,95 mm
V. $s_2$ = 0,25 mm.

**3.** Applicateur selon la revendication 1, **caractérisé par** la combinaison de paramètres suivante :

I. n = 11  II. N = 28
III. I = 2,4 mm  IV. $s_1$ = 1,2 mm
V. $s_2$ = 0,42 mm.

**4.** Applicateur selon l'une quelconque des revendications 1 à 3, **caractérisé en ce que** le nombre N de couronnes de doigts ($K_1$, $K_2$, $K_3$...) situées les unes derrière les autres dans la direction axiale de la gaine porteuse est égal au nombre des dents 15.

**5.** Applicateur selon l'une quelconque des revendications 1 à 4, **caractérisé en ce que** les doigts (13) de la couronne de doigts ($K_1$, $K_2$, $K_3$...) sont répartis uniformément sur la périphérie de la gaine porteuse (12).

**6.** Applicateur selon l'une quelconque des revendications 1 à 4, **caractérisé en ce que** l'applicateur présente un diamètre extérieur D de l'ordre de 6,0 mm à 10,0 mm.

**7.** Applicateur selon l'une quelconque des revendications 1 à 6, **caractérisé en ce que** le diamètre extérieur d de l'âme (11) est compris dans la plage de 1,5 mm à 2,5 mm.

**8.** Applicateur selon l'une quelconque des revendications 1 à 7, **caractérisé en ce que** la gaine porteuse (12) présente une épaisseur de paroi radiale a de l'ordre de 0,3 mm à 1,0 mm.

**9.** Applicateur selon l'une quelconque des revendications 1 à 8, **caractérisé en ce que** la gaine porteuse (12), conjointement avec les doigts (13), se compose d'un plastique élastomère.

**10.** Applicateur selon l'une quelconque des revendications 1 à 9, **caractérisé en ce que** la gaine porteuse (12) présente une longueur axiale L de l'ordre de 20,0 mm à 35,0 mm.

**11.** Applicateur selon l'une quelconque des revendications 1 à 10, **caractérisé en ce que** la gaine porteuse (13) dépasse dans sa portion d'extrémité avant (12b) de la mesure v au-delà de l'extrémité avant (11d) de l'âme (11), v étant comprise entre 1,0 mm et 8,0 mm.

**12.** Applicateur selon au moins l'une quelconque des revendications précédentes, **caractérisé en ce que** le nombre des dents (15) n'est pas inférieur à N-5 et n'est pas supérieur à N+5.

**13.** Applicateur selon l'une quelconque des revendications 1 à 12, **caractérisé en ce qu'**au moins un doigt d'une couronne de doigts est disposé de manière décalée par rapport aux autres doigts de la couronne de doigts, de la dimension $v_F$ dans la direction longitudinale de la gaine porteuse (12).

**14.** Applicateur selon la revendication 13, **caractérisé en ce qu'**un doigt sur deux de la couronne de doigts est disposé de manière décalée.

**15.** Applicateur selon l'une quelconque des revendications 1 à 14, **caractérisé en ce que** des couronnes de doigts adjacentes ($K_1$, $K_2$, $K_3$...) sont disposées de manière décalées les unes par rapport aux autres dans la direction périphérique suivant un angle $\alpha$, avec $0° \leq \alpha \leq 10°$.

**16.** Applicateur selon l'une quelconque des revendications 1 à 15, **caractérisé en ce que** le diamètre de la base $d_F$ du doigt (13) est de l'ordre de 0,4 mm à 1,0 mm.

**17.** Applicateur selon l'une quelconque des revendications 1 à 16, **caractérisé en ce que** les doigts (13) sont réalisés sous forme conique ou pyramidale et sont arrondis à leur extrémité libre.

**18.** Applicateur selon la revendication 17, **caractérisé en ce qu'**un rayon R de l'arrondi est compris dans la plage de 0,02 mm à 0,2 mm.

Fig. 1

Fig. 2

EP 1 602 300 B1

Fig. 6

Fig. 3

Fig. 4

Fig. 5

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10102219
- DE 19911763